# EUROPÄISCHE PATENTSCHRIFT

(11) **EP 2 133 672 B1**
(45) Veröffentlichungstag und Bekanntmachung des Hinweises auf die Patenterteilung: **22.10.2014**
(21) Anmeldenummer: 09007826.2
(22) Anmeldetag: 15.06.2009
(51) Int. Cl.: A01K 5/02, A01K 29/00, G01G 23/37, A01K 45/00, G01G 17/08

(54) **Geflügelwaage**
Scales for weighing poultry
Balance pour volaille

(30) Priorität: 13.06.2008 DE 202008007880 U
(43) Veröffentlichungstag der Anmeldung: 16.12.2009
(73) Patentinhaber: Big Dutchman International GmbH, 49377 Vechta (DE)
(72) Erfinder: Grave, Johann, 49692 Schwichteler (DE); Südkamp, Bernard Heinrich, 49413 Dinklage (DE)
(74) Vertreter: Eisenführ Speiser

(56) Entgegenhaltungen:
- EP-A- 0 589 534
- EP-A- 1 250 838
- FR-A- 2 507 776
- GB-A- 1 407 195
- US-A- 5 474 085
- US-A1- 2005 217 592

## Beschreibung

Die Erfindung betrifft eine Geflügelwaage, umfassend eine Aufstandsfläche, die so ausgebildet ist, dass darauf zumindest ein Geflügeltier stehen kann und einen Kraftsensor, der so mit der Aufstandsfläche gekoppelt ist, dass er die Gewichtskraft des/der auf der Aufstandsfläche stehenden Geflügeltiere(s) erfassen kann.

Geflügelwaagen dieser Art werden dazu eingesetzt, um in der Geflügelmasttierhaltung das Gewicht der Tiere über den Mastzeitraum zu messen und auf diese Weise die Entwicklung und die Gesundheit der Tiere zu überwachen und den Zeitpunkt der Ausstallurg zu bestimmen. Geflügelwaagen des Standes der Technik können beispielsweise solcherart in einem Stall zur Haltung von Geflügel angeordnet sein, dass sie durch eine Aufstandsfläche gebildet werden, die in hängender Weise knapp oberhalb des Stallbodens, auf dem sich die Geflügeltiere aufhalten, angeordnet sind und der Kraftsensor oberhalb der Aufstandsfläche in die Befestigung eingekoppelt ist, um das Gewicht von einem oder mehreren Tieren, die sich auf der Aufstandsfläche befinden, zu erfassen. In einer anderen vorbekannten Ausführungsweise ist die Aufstandsfläche oberhalb des Bodens, auf dem die Geflügeltiere sich aufhalten, angeordnet und auf diesem Boden über einen oder mehrere Kraftsensoren abgestützt, um in gleicher Weise die Gewichtskraft von Geflügeltieren, die sich auf der Aufstandsfläche befinden, zu erfassen.

Geflügelwaagen der zuvor beschriebenen Art werden insbesondere in der Aufzucht von Broilern verwendet. Im Sinne dieser Beschreibung und der anhängenden Ansprüche ist aber zu verstehen, dass sich die Geflügelwaagen für jegliche Art von Geflügel eignen und zur Gewichtskraftmessung eingesetzt werden können. Darüber hinaus können Geflügelwaagen der zuvor beschriebenen Bauweise auch für die Gewichtskraftmessung anderer Tiere verwendet werden. Insbesondere ist hierfür eine dem Fachmann geläufige größenmäßige Anpassung des Messbereichs des Kraftsensors und der Aufstandsfläche erforderlich, um die jeweils zu messenden Tiere aufnehmen und messen zu können.

Aus US 5,474,085 ist ein thermographisches Bilderfassungssystem bekannt, welches ausgebildet ist, um die Anzahl, das Gewicht, die Anordnung, die Temperatur von Tieren in einem Überwachungsbereich zu bestimmten. Aus US 2005/0217592 A1 ist ein Fütterungskontrollsystem bekannt, bei dem ein Tier vor Eintritt in Fütterungskarussell auf einer Waage gewogen wird und hierbei auch mittels eines Infrarotsensors die Hauttemperatur des Tieres ermittelt wird. Aus EP 1250838 A2 ist eine Fütterungsvorrichtung bekannt, die eine Aufstandsfläche für ein Tier zur Gewichtsmessung an dem Tier beinhaltet. Aus FR 2507776 ist ebenfalls eine kombinierte Fütterungs- und Wiegeeinrichtung für ein Tier bekannt. Aus GB 1407195 ist eine Schweinewaage bekannt, bei der das Vorhandensein eines Tieres auf der Waage durch Überschreiten eines Gewichtsgrenzwertes ermittelt wird.

Aus EP 0 589 534 A1 ist eine Geflügelwaage bekannt, welche in der Lage ist, ein Einzeltier zu messen und zugleich mittels entsprechender, in der Waage angeordneter Antennen eine Codierung eines Fußrings dieses Tieres auszulesen. Auf diese Weise ist es möglich, innerhalb einer größeren Population von Geflügeltieren zwei oder mehr unterschiedliche Gruppen innerhalb dieser Population zu differenzieren und differenziert deren Gewicht zu erfassen. Zwar kann mit Geflügelweagen der zuvor beschriebenen Weise eine verbesserte Überwachung des Tierbestandes in einer Stalleinheit erzielt werden, jedoch ist bekannt, dass trotz des Einsatzes von Geflügelwaagen noch eine regelmäßige zusätzliche Überwachung durch den Geflügelhalter erforderlich ist, um die Entwicklung des Geflügeltierbestandes zu erfassen und Krankheiten im Tierbestand festzustellen. Der Erfolg dieser zusätzlichen Überwachungsmaßnahmen seitens des Geflügelhalters hängt maßgeblich von dem Grad der Erfahrung und Wissensstand des Geflügelhalters ab. In ungünstigen Fällen kann trotz einer Überwachung mit Geflügelwaage und durch den Geflügelhalter eine Erkrankung eines Tieres innerhalb des Tierbestandes nicht rechtzeitig erkannt werden, was zu einer Ausbreitung der Krankheit innerhalb des Tierbestandes führen kann. Es ist ein erstes Ziel dieser Erfindung, eine verbesserte Überwachung von Geflügeltierbeständen zu ermöglichen, um dem Geflügelhalter eine verbesserte Information über nicht normale Entwicklungen der Geflügelfiiere zur Verfügung stellen zu können.

Ein weiteres Problem bei der Geflügeltierhaltung besteht in der Bestimmung des Ausstallungszeitpunktes. Der ideale Ausstallungszeitpunkt wird üblicherweise anhand eines Normgewichtes, den der Tierbestand durchschrtittlich aufweisen solite, bestimmt. Wird das durchschnittliche Normgewicht allein auf Grundlage von Messungen mit einer Geflügeltierwaage innerhalb der Käfigeinheit ermittelt, so kommt es in bestimmten Situationen zu Messefehlem, die beispielsweise dadurch bedingt sind, dass nur bestimmte, beispielsweise besonders aktive, Tiere gemessen werden und bei der Berechnung des Durchschnittsgewichts andere, inaktivere Tiere, die beispielsweise ein höheres Gewicht aufweisen können, nicht von der Gewichtsmessung erfasst werden. Es ist ein zweites Ziel der Erfindung, dem Geflügelhalter zu ermöglichen, den Ausstallungszeitpunkt anhand einer fundierteren Datenlage zu bestimmen, um eine genauere Aussage über das Durchschnittsgewicht des Tierbestandes treffen zu können.

Ein weiteres Problem bei der Geflügeltierhaltung ist die Abschätzung des Schlachtgewichts aus dem Durchschnittsgewicht der Geflügelftiere innerhalb der Stalleinheit. Je nach Aufzuchtverhalten, Bewegungsspielraum, Ernährungsweise und anderen Faktoren kann sich ein Geflügeltierbestand unterschiedlich entwickeln und hierdurch können sich verschiedene Verhältnisse zwischen Geflügels tiergewicht und Schlachtgewicht ergeben. Es ist ein weiteres Ziel der Erfindung, dem Geflügeltierhalter eine bessere Abschätzung des Schlachtgewichts anhand des Geflügeltiergewichts zu ermöglichen.

Es besteht ein grundlegender Bedarf dafür, Geflügeltierbestände auf andere Merkmale, beispielsweise Geschlecht, Rasse oder dgl. zu untersuchen und hierüber in automatisierter Weise Erkenntnisse zu gewinnen. Es ist ein Ziel dieser Erfindung, eine solche Merkmalsbestimmung zu ermöglichen.

Erfindungsgemäß wird eine Geflügelwaage nach Anspruch 1 bereitgestellt, die durch einen mit der Aufstandsfläche verbundenen zweiten Sensor zur Erfassung einer anderen Messgröße als der Gewichtskraft eines oder mehrerer Geflügeltiere, das auf der Aufstandsfläche steht, gekennzeichnet ist.

Mit der erfindungsgemäßen Geflügelwaage wird ermöglicht, nicht nur das Gewicht der Geflügeltiere in einem Messvorgang zu erfassen, sondern hierbei einen zusätzlichen Messwert des Geflügeltieres zu gewinnen, der praktisch zeitgleich mit der Gewichtskraft oder zeitversetzt hierzu an der gleichen Stelle innerhalb der Stalleinheit, nämlich dort, wo die Geflügelwaage aufgestellt ist, erfasst wird. Die Erfindung stellt somit den Vorteil bereit, dass zwei Messwerte ermittelt werden und durch die örtliche Übereinstimmung des Erfassungsbereichs dieser Messwerte eine Zuordnung zu im Idealfall einem Geflügeltier erfolgen kann, so dass zwei Messwerte einem Tier zugeordnet und in Relation gesetzt werden können. Durch die Vereinigung von zwei Sensoren im Bereich der Geflügelwaage wird zudem eine sowohl wartungstechnisch als auch konstruktiv vereinfachte Aufbauweise innerhalb der Stalleinheit erreicht, indem Ableitung und Weiterleitung der Signale beider Sensoren über einen zentralen Kabelstrang oder eine andere Datenübertragungsvorrichtung, wie beispielsweise drahtlose Übertragung, von der Geflügelwaage zu einer Datenerfassungseinheit erfolgen kann.

Grundsätzlich sind eine Reihe verschiedener Arten von zweiten Sensoren denkbar, so beispielsweise Sensoren, welche die Farbe des Tieres erfassen, Sensoren, welche eine oder mehrere Temperaturen im Bereich des Körpers des Tieres erfassen, Sensoren, welche ein Volumen des gesamten Tieres oder eines Teiles des Tieres erfassen, Sensoren, welche eine Kontur des gesamten Tieres oder eines Körperteils des Tieres erfassen, Sensoren, welche eine Höhe, Länge oder Breite des Tieres erfassen und dgl.

Erfindungsgemäß sind sowohl der Kraftsensor als auch der zweite Sensor mit der Aufstandsfläche verbunden, was in solcher Art zu verstehen ist, dass diese an der Aufstandsfläche befestigt sind. Hierbei muss nicht eine unmittelbare Anordnung an der Aufstandsfläche realisiert sein, sondern der erfindungsgemäße Vorteil wird dadurch erzielt, dass die beiden Sensoren solcherart in Bezug und Nähe zur Aufstandsfläche befestigt sind, dass eine gemeinsame Datenableitung über eine zentrale Datenübertragung von der Geflügelwaage aus möglich ist und zudem eine Erfassung der beiden Sensorsignale an demjenigen Tierbestand, der sich auf der Aufstandsfläche befindet, durchgeführt werden kann.

Gemäß einer ersten bevorzugten Ausführungsform ist vorgesehen, dass der zweite Sensor ein Sensor zur Messung der Höhe eines oder mehrerer Geflügeltiere ist, die auf der Aufstandsfläche stehen. Durch diese Fortbildung wird als aufschlussreicher zweiter Messwert die Höhe der Geflügeltiere ermittelt, und hierdurch ermöglicht, ein Verhältnis von Gewicht zu Höhe der Tiere als Beurteilungsgrundlage für den Tierbestand zu erhalten. Grundsätzlich kann der hierfür eingesetzte Sensor berührungslos oder in berührender Weise messen.

Dabei ist insbesondere bevorzugt, wenn der Sensor zur Messung der Höhe mehrere in einer sich vertikal erstreckenden Reihe und oberhalb der Aufstandsfläche angeordnete Lichtschranken umfasst, die jeweils einen Strahlungssender und einen Strahlungsempfänger umfassen und ausgebildet sind, um die Unterbrechung eines sich horizontal erstreckenden Strahls zu detektieren. Durch diese Ausgestaltung wird eine Reihe übereinander liegender Lichtschranken bereitgestellt, die beispielsweise durch mehrere übereinander liegende, horizontal verlaufende Laserstrahlen und entsprechende Strahlungsempfänger ausgebildet werden können. Tritt ein Tier in den Bereich dieser Reihe von Licht-schranken, so unterbricht es Schranken über den Bereich seiner gesamten Höhe, so dass aus der höchsten, nicht unterbrochenen Lichtschranke auf die Höhe des Tieres geschlossen werden kann.

Grundsätzlich ist im Sinne dieser Beschreibung und der Ansprüche zu verstehen, dass die Lichtschranken nicht notwendigerweise mit einer Wellenlänge im sichtbaren Bereich betrieben werden müssen, sondern die erfindungsgemäße Funktion kann in gleicher Weise durch Verwendung anderer Wellenlängen, die auch nicht sichtbar sein können, erzielt werden.

Bei dieser Ausgestaltung ist es vorteilhaft, wenn die Lichtschranken alle in einer sich vertikal erstreckenden Ebene liegen und in gleichmäßigen Abständen zueinander angeordnet sind. Der Abstand zwischen zwei unmittelbar benachbarten Lichtschranken ergibt hierbei die mit der Höhenmessung erreichbare Auflösung des Höhenmessungssensorfeldes. In bestimmten Anwendungsfällen kann es auch vorteilhaft sein, diesen Abstand unregelmäßig auszuführen, beispielsweise um in denjenigen Höhenmessbereichen, in denen eine besonders genaue Auflösung gewünscht ist, mehr Lichtschranken in kürzeren Abständen zueinander anzuordnen.

Die Höhenmessung mittels mehrerer übereinander gestaffelter Lichtschranken kann insbesondere solcherart ausgeführt sein, dass die Strahlungssender so an einer ersten, sich vertikal von der Aufstandsfläche erstreckenden Leiste angeordnet sind und die Strahlungsempfänger so an einer von der ersten Leiste beabstandeten zweiten, sich vertikal erstreckenden Leiste angeordnet sind, dass die Höhe eines sich zwischen den Leisten befindenden Geflügeltieres gemessen wird. Bei dieser Ausführungsform sind Strahlungssender und Strahlungsempfänger durch den Raum getrennt, in dem sich das Tier, dessen Höhe gemessen werden soll, aufhält. In einer anderen Ausgestaltung kann auch Strahlungssender und Strahlungsempfänger an ein und derselben Leiste angeordnet sein und der Bereich, in dem sich das zu messende Tier aufhält, durch dieser Leiste und eine von dieser Leiste beabstandete Reflexionsleiste begrenzt werden, welche die von den Strahlungssendem ausgesendete Strahlung auf die Strahlungsempfänger reflektiert.

Gemäß der Erfindung ist vorgesehen, dass die Aufstandsfläche ausgebildet ist, um mehrere Geflügeltiere aufzunehmen und der Kraftsensor mit einer Auswertungseinheit verbunden ist, die ausgebildet ist, um Veränderungen des Kraftsensorsignals mit vorgespeicherten Gewichtsdaten zu vergleichen und dann, wenn die Veränderung des Kraftsensorsignals eine Gewichtskraftveränderung der auf der Aufstandsfläche befindlichen Geflügeltiere darstellt, die in einem vorbestimmten Gewichtskraftbereich ist, die Gewichtskraftänderung als Gewichtskraft eines einzelnen Geflügeltieres zu speichern.

Grundsätzlich besteht in vielen Anwendungen die Problematik, das nicht in ausreichend sicherer und häufiger Weise ein einzelnes Geflügeltier auf die Aufstandsfläche sich bewegt und auf diese Weise isoliert und definiert gemessen werden kann. Stattdessen ist es häufig vorteilhaft, eine Aufstandsfläche bereitzustellen, die mehrere Geflügeltiere aufnehmen kann. Bei dieser Art der Ausge staltung der Geflügelwaage kann eine Messung einzelner Geflügeltiere gleichwohl solcherart erfolgen, dass das Hinzutreten oder Herunterspringen von Geflügeltieren von der Aufstandsfläche ermittelt wird, indem Veränderungen des Kraftsensorsignals mit einem Bereich von typischen Gewichtskräften von Geflügeltieren des jeweils entsprechenden Alters verglichen werden und dann, wenn sich das Kraftsensorsignal innerhalb einer solchen typischen Gewichtskraftsbereichs verändert hat, die Veränderung als Messung eines einzelnen Tieres bewertet und entsprechend verarbeitet werden kann. Auf diese Weise kann auch bei Aufstandsflächen, die mehrere Tiere aufnehmen, eine Einzelmessung hinzutretender und herunterspringender Tiere erfolgen.

Gemäß einer weiteren bevorzugten Ausführungsform kann die erfindungsgemäße Geflügelwaage fortgebildet werden durch einen Temperatursensor, welcher der zweite Sensor oder ein zusätzlicher mit der Aufstandsfläche verbundener dritter Sensor ist und der so angeordnet ist, dass er eine Körpertemperatur eines auf der Aufstandsfläche befindlichen Geflügeltieres messen kann. Bei dieser Fortbildung wird der zweite Sensor als Temperatursensor ausgeführt oder ein zusätzlicher dritter Sensor bereitgestellt, der ein Temperatursensor ist. Diese Ausgestaltung ermöglicht es, neben der Gewichtskraft die Körpertemperatur des Geflügeltieres zu messen, die Aufschluss über den Gesundheitszustand und das Wohlbefinden des Geflügeltieres geben kann. So kann beispielsweise aus der Temperatur der Füße des Geflügeltieres darauf geschlossen werden, ob der Boden des Stalles eine für die Geflügeltierhaltung richtige Temperatur aufweist und auf diese Weise eine wichtige Information zur Steuerung von Klimadaten innerhalb der Stalleinheit gewonnen werden.

Dabei ist es insbesondere bevorzugt, wenn der Temperatursensor als Temperaturstrahlungsempfänger ausgebildet ist und eine Temperaturstrahlung aus einem definierten Bereich empfängt Durch die Verwendung eines auf einer Strahlungsmessung basierenden Temperatursensors kann einerseits eine berührungslose und somit weitestgehend schmutzunempfindliche Messung durchgeführt und andererseits ein bestimmter Körperbereich des Geflügeltieres gemessen werden.

Noch weiter ist es bevorzugt, wenn der Temperatursensor eine Temperaturstrahlung aus einem definierten Bereich empfängt, der sich vom Temperatursensor ausgehend über die Aufstandsfläche nach schräg unten erstreckt und die horizontale Ebene, welche durch die Aufstandsfläche gebildet wird, neben der Aufstandsfläche durchläuft. Bei dieser Ausgestaltung verläuft der Bereich, aus dem der Temperatursensor die Temperaturstrahlung empfängt, als gebündelter Strahlbereich von einer erhöhten Position in Richtung des Stallbodens und trifft auf den Stallboden neben der Aufstandsfläche der Geflügelwaage, wenn die Geflügelwaage im Bereich eines Stallbodens installiert ist. Diese Ausgestaltung ermöglicht es, dass dann, wenn sich kein Geflügeltier im Bereich des Temperatursensors befindet, unmittelbar die Temperatur des Stallbodens gemessen wird, wodurch,eine zusätzliche und unmittelbar Einfluss nehmende Messgröße mittels der Geflügelwaage gewonnen werden kann.

Bei den zuvor genannten Ausführungsformen, bei denen ein Temperatursensor als zweiter oder dritter Sensor eingesetzt wird, ist es insbesondere bevorzugt, wenn der zweite oder dritte Sensor oder ein vierter Sensor ein Temperatursensor ist, der in der Aufstandsfläche angeordnet ist und eine Temperatur der Geflügeltierfußes erfasst. Mit dieser Ausgestaltung wird unmittelbar die Temperatur der Füße der Geflügeltiere oder eines einzelnen Geflügeltieres gemessen und hierdurch ermöglicht, unmittelbar Rückschluss auf den Gesundheitszustand und das Wohlbefinden des Tieres bzw. die Haltungsbedingungen erhalten.

Gemäß einer weiteren bevorzugten Ausführungsform ist vorgesehen, dass
- die Aufstandsfläche zur Aufnahme mehrerer Geflügeltiere ausgebildet ist,
- oberhalb der Aufstandsfläche eine verkleinerte, zweite Aufstandsfläche ausgebildet ist, die zur Aufnahme genau eines Geflügeltieres ausgebildet ist,
- in der zweiten Aufstandsfläche ein Kontakt-Temperatursensor angeordnet ist, der eine Temperatur des Geflügeltierfußes erfasst, und
- oberhalb der zweiten Aufstandsfläche ein Strahlungs-Temperatursensor angeordnet ist, der Strahlung aus dem Bereich empfängt, in dem sich der Körper eines Geflügeltieres befindet, das auf der zweiten Aufstandsfläche steht.

Mit dieser Ausgestaltung wird ermöglicht, dass einerseits eine Gewichtskraftmessung von Geflügeltieren in der vorbekannten Weise erfolgt, indem eine Aufstandsfläche für mehrere Tiere bereitgestellt wird, zugleich aber zusätzlich in definierter Weise Einzeltiere, die sich auf einer zusätzlichen, zweiten Aufstandsfläche befinden, hinsichtlich ihres Gewichts, ihrer Fußtemperatur und Körpertemperatur gemessen werden können.

Die erfindungsgemäße Geflügelwaage kann weiter fortgebildet werden durch eine Auswertungseinheit, welche zumindest das Signal des Kraftsensors und des zweiten Sensors empfängt und ausgebildet ist, um diese Signale mit vorbestimmten Werten einer Referenztabelle oder eines Referenzgraphen zu vergleichen. Die Fortbildung ermöglicht eine unmittelbare Zuordnung der unterschiedlichen Messsignale und eine Darstellung der zugeordneten Messsignale hinsichtlich des zeitlichen Verlaufs und kann somit dem Geflügeltierhalter eine aufschlussreiche Beurteilungsgrundlage für den Zustand des Geflügeltierbestands geben.

Gemäß einer weiteren bevorzugten Ausführungsform wird die erfindungsgemäße Geflügelwaage durch eine mit der Aufstandsfläche verbundene Kamera, welche der zweite Sensor oder ein zusätzlicher Sensor ist und die ausgebildet ist, um die Kontur eines Geflügeltieres oder eines Teils eines Geflügeltieres zu erfassen, fortgebildet Eine solche Kamera ermöglicht es, das Volumen und die Höhe des gesamten Körpers eines Geflügeltieres zu erfassen, um hierdurch eine Messgröße zur Gewichtskraft erhalten, die über den Gesundheits- und Mastzustand des Geflügeltiers einen wichtigen Aufschluss gibt. Des Weiteren kann eine solche Kamera es ermöglichen, bestimmte Körperteile eines Geflügeltieres zu erfassen, um hierdurch Aufschluss über bestimmte Eigenschaften des Geflügeltieres zu gewinnen. So ist es beispielsweise möglich, durch Erfassung des Kopfbereichs eines Geflügeltieres eine Geschlechteridentifizierung anhand eines vorhandenen oder nicht vorhandenen Hahnenkamms durchzuführen.

Ein weiterer Aspekt der Erfindung ist eine Geflügelstallausrüstung, umfassend eine Geflügelwaage nach einem der vorhergehenden Ansprüche und eine Tränke und/oder Futterstelle, die gekennzeichnet ist durch einen Aktuator, der mit der Tränke und/oder Futterstelle solcherart gekoppelt ist, wobei mittels des Aktuators die Höhe der Tränke und/oder Futterstelle verstellt werden kann, und durch eine Steuerungseinheit, welche von einem zweiten Sensor der Geflügelwaage, der als Höhenmesssensor ausgebildet ist, zumindest ein Höhensignal empfängt, dies auswertet und welche mit dem Aktuator verbunden ist, um diesen in Abhängigkeit des Signals des Höhenmesssensors anzusteuern.

Mit dieser Fortbildung wird eine automatisierte Anpassung der Höhe von Tränke und Futterstelle innerhalb einer Stalleinheit ermöglicht. Es ist in besonderer Weise vorteilhaft, da es für Geflügeltiere für eine erfolgreiche Aufzucht erforderlich ist, dass sowohl Tränke als auch Futterstelle weder in zu niedriger Weise angeordnet sind, was zu starker Verschmutzung des Stallbereichs führt, noch in zu hoher Weise angeordnet sind, was kleineren Tieren des Bestandes den Zugriff auf Tränke und Futterstelle erschweren oder nicht mehr ermöglichen würde. Durch die automatisierte Höhenerfassung der Geflügeltiere und Höhenverstellung von Tränke und Futterstelle in Abhängigkeit der ermittelten Höhe des Geflügeltierbestandes können Tränke und Futterstelle stets in der idealen Höhe angeordnet werden. Hierbei ist zu verstehen, dass zur Bestimmung der Idealhöhe eine Einzeltiermessung der Höhe der Tiere erforderlich ist, um diese Idealhöhe anhand des kleinsten Tieres zu ermitteln.

Die erfindungsgemäße Geflügelstallausrüstung kann vorzugsweise nach einem Verfahren zum Betreiben eines Geflügelaufzuchtstalles betrieben werden, welches die Schritte umfasst:
Messen der Höhe eines oder mehrerer Geflügeltiere im Geflügelaufzuchtstall mittels einer Höhenmessvorrichtung, gegebenenfalls Filtern der HöhenMesswerte und/oder Mittelwertbildung aus den Höhenmesswerten mittels einer Auswertungseinheit, Ansteuern eines Aktuators mittels der Auswertungseinheit in Abhängigkeit der Höhenmesswerte, und Verstellen der Höhe einer Tränke und/oder einer Futterstelle mittels des Aktuators.

Durch den Betrieb nach diesem Verfahren wird eine weitestgehende automatisierte und den Bedürfnissen der Tiere in idealer Weise angepasste Betriebsweise eines Geflügelaufzuchtstalles ermöglicht.

Bevorzugte Ausführungsformen der Erfindung werden anhand der beiliegenden Figuren erläutert. Es zeigen:
- Fig. 1:: eine Frontalansicht einer ersten Ausführungsform der erfindungsgemäßen Geflügelwaage,
- Fig. 2:: eine perspektivische Ansicht von schräg vorne seitlich oben der Ausführungsform gemäß Fig.1,
- Fig. 3:: eine perspektivische Ansicht von schräg vorne seitlich oben einer zweiten Ausführungsform der erfindungsgemäßen Geflügelwaage,
- Fig. 4:: eine Seitenansicht der Ausführungsform gemäß Fig. 3, und
- Fig. 5:: eine Frontalansicht der Ausführungsform gemäß Fig.3.

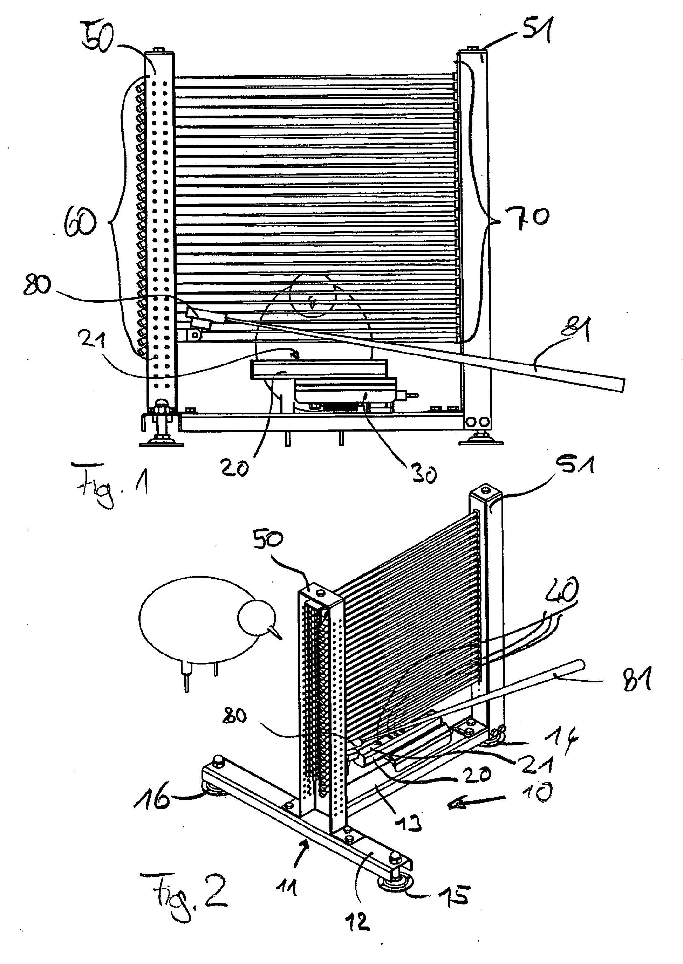

Bezug nehmend auf die Figuren 1 und 2 weist eine erste Ausführungsform der erfindungsgemäßen Geflügelwaage eine T-förmige Basisträgerstruktur 10 auf, die durch zwei an einer Verbindungsstelle 11 verbundene U-Profile 12, 13 ausgebildet wird. An jedem Ende der Basisträgerstruktur 10 ist ein höhenverstellbarer Standfuß 14, 15, 16 angeordnet.

Auf dem U-Profil 13 ist ein Stehbalken 20 befestigt, der eine obere Standfläche 21 aufweist. Die Standfläche 21 ist so bemessen, dass ein einziges Huhn auf dieser Platz findet und mit beiden Füßen auf der Standfläche 21 stehen kann. Wenn ein einziges Huhn auf dieser Standfläche mit beiden Füßen steht, so kann kein weiteres Huhn auf der Standfläche 21 vollständig oder teilweise stehen.

Der Standbalken 20 ist mittels eines Kraftsensors 30 auf dem U-Profil 13 abgestützt. Auf diese Weise kann die Gewichtskraft eines Huhnes, das sich auf der Standfläche 21 befindet, mittels des Kraftsensors gemessen werden.

Weiterhin sind in der Standfläche 21 mehrere Temperatursensoren 40 eingelassen, welche die Fußtemperatur eines Huhns messen, das sich auf der Standfläche 21 befindet. Hierdurch wird ermöglicht, dass zeitgleich mit der Gewichtskraftmessung auch eine Temperaturmessung der Fußtemperatur des Huhnes erfolgt und somit Gewichtskraft und Fußtemperatur einem einzelnen Huhn zugeordnet werden können. Etwa mittig vom U-Profil 12 erstreckt sich in vertikaler Richtung ein Profilträger 50, der unmittelbar benachbart zur Verbindungsstelle 11 zwischen dem U-Profil 12 und dem U-Profil 13 angeordnet ist.

An dem vertikalen Profilträger 50 ist eine Vielzahl von Strahlungssendem 60 angeordnet, die jeweils eine Laserstrahlung in horizontaler Richtung aussenden. Die Strahlungssender 60 sind in einer vertikalen Reihe übereinander gestaffelt und liegen jeweils in einem Abstand von 1,5 cm zueinander. Es ist zu verstehen, dass der Abstand zwischen den einzelnen Strahlungssendem gemäß der Erfindung je nach gewünschter Auflösung der Höhenmessung gewählt werden kann und auch andere Werte als 1,5 cm annehmen kann. Insbesondere ist zu verstehen, dass der Abstand zwischen jeweils zwei benachbarten Strahlungssendem nichts stets gleich sein muss, sondern sich dieser Abstand auch über die Höhe des Profilträgers 15 ändern kann.

Die Strahlungssender 60 senden jeweils eine Strahlung aus, die in einer gemeinsamen Ebene 61 liegt.

An dem dem Profilträger 50 gegenüberliegenden Ende des U-Profils 13 ist ein weiterer Profilträger 51 angeordnet. Im Profilträger 51 sind eine Vielzahl von Strahlungsempfängern 70 angeordnet. Die Strahlungssender 70 sind in gleicher Weise wie die Strahlungssender 60 vertikal übereinander gestaffelt und der Abstand zwischen zwei benachbarten Strahlungsempfängern 70 entspricht dem Abstand zwischen zwei benachbarten Strahlungssendern 60. Die Anzahl der Strahlungssender und die Anzahl der Strahlungsempfänger ist übereinstimmend, jedem Strahlungssender ist ein Strahlungsempfänger zugeordnet, der auf gleicher Höhe liegt.

Durch das Zusammenwirken der Strahlungssender 60 und Strahlungsempfänger 70 wird ein linienförmiges Raster von Höhenmesslinien gebildet. Dieses Raster, das in der Ebene der ausgesendeten Laserstrahlen liegt, ist solcherart oberhalb der Aufstandsfläche 21 angeordnet, dass ein Huhn, das auf der Aufstandsfläche 21 steht, die Laserstrahlen unterbricht, so dass die Strahlungsempfänger 70 in dem Bereich, in dem das Huhn die Laserstrahlung unterbricht, keine Strahlung mehr empfangen. Oberhalb des Huhns, wo durch den Körper des Huhns die Laserstrahlen nicht unterbrochen werden können, empfangen die Strahlungsempfänger jedoch die Strahlung. Durch denjenigen Strahlungsempfänger, der eine Strahlung empfängt und am niedrigsten liegt, kann die Höhe des Huhns bestimmt werden.

Am Profilträger 50 ist weiterhin ein kontaktlos messender Temperatursensor 80 angeordnet. Der Temperatursensor 80 ist solcherart ausgerichtet, dass er eine Temperaturstrahlung aus einem schmalen, gebündelten strahlförmigen Bereich 81 erfasst. Dieser schmale, gebündelte Bereich 81 erstreckt sich vom Temperatursensor 80 schräg abwärts und überstreicht hierbei etwas seitlich den Bereich oberhalb der Aufstandsfläche 21. Durch diese Ausrichtung empfängt der Temperatursensor 80 eine Körpertemperatur von einem Huhn, das auf der Aufstandsfläche 21 ist.

Durch das Zusammenspiel der Strahlungssender 60 und Strahlungsempfänger 70 sowie des Temperatursensors 80 mit den Temperatursensoren 40 und dem Kraftsensor 30 wird ermöglicht, mittels der erfindungsgemäßen Geflügelwaage zeitgleich die Höhe, das Gewicht, die Temperatur des Korpus des Huhns und die Temperatur der Füße des Huhns zu erfassen und einem einzelnen Huhn diese Messwerte zuzuordnen. Hierdurch wird über den Gesundheits- und Entwicklungszustand des Huhns eine Zusammenstellung der wesentlichen Messwerte gewonnen und eine bessere Beurteilung des Gesundheits- und Entwicklungszustandes des Huhns ermöglicht.

Der Temperatursensor 80 ist durch seine schräg nach unten verlaufende Ausrichtung des Temperaturmessbereichs auf einen Punkt auf dem Stallboden um die erfindungsgemäße Geflügelwaage herum gerichtet und empfängt von diesem Stallbodenpunkt die Temperatur, wenn sich kein Huhn auf der Aufstandsfläche 21 befindet. Auf diese Weise kann auch während eines Zeitraums, in dem keine Messung der Gewichtskraft und Temperatur eines Huhns stattfindet, von der erfindungsgemäßen Geflügelwaage ein für den Geflügelhalter wichtiger Messwert gewonnen werden und gegebenenfalls in Abhängigkeit dieses Messwerts eine Klimaregelung des Stalls durchgeführt werden.

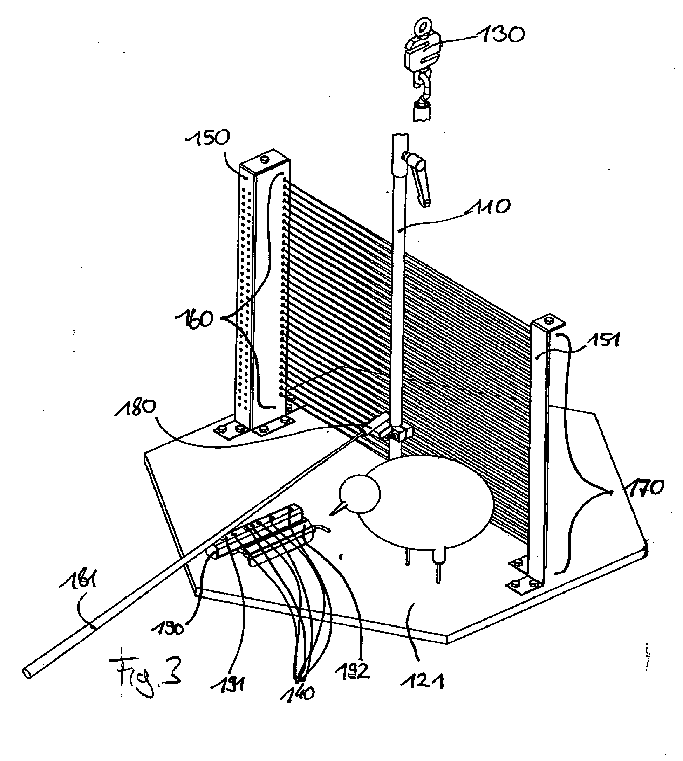

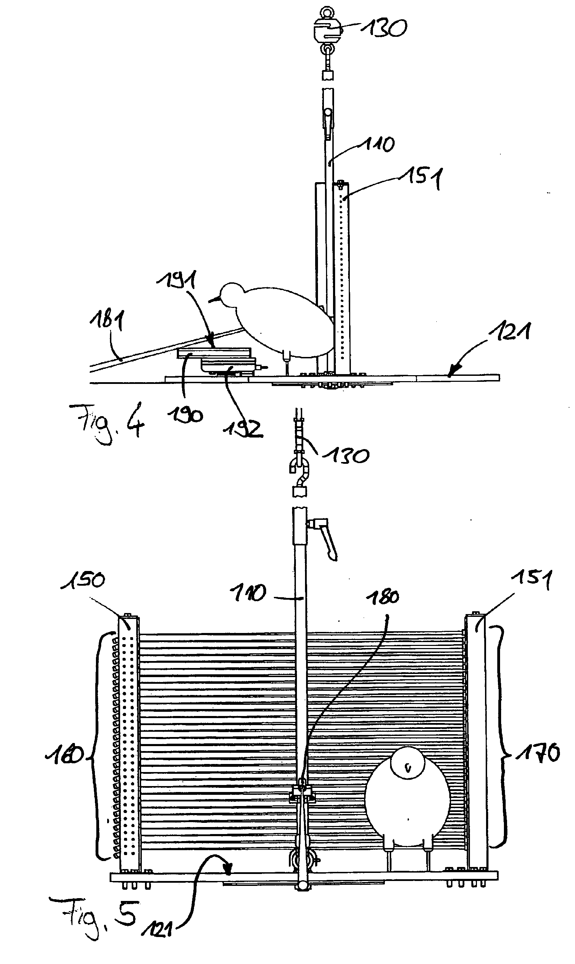

Bezug nehmend auf die Figuren 3 bis 5 ist eine zweite Ausführungsform der Erfindung gezeigt. Bei der zweiten Ausführungsform ist eine sechseckige Standfläche 121 ausgebildet, auf der mehrere Hühner gleichzeitig stehen können. Die Standfläche 121 ist durch ein zentral angeordnetes hängendes Gestänge 110 mit einem Kraftsensor 130 gekoppelt, der mit dem Deckenbereich eines Stallgebäudes verbunden ist. Auf diese Weise ist die Standfläche 121 hängend gelagert und kann im Bereich, beispielsweise knapp oberhalb, des Stallbodens oder in einer entsprechend geformten Aussparung des Stallbodens platziert sein.

Mittels des Kraftsensors 130 kann die Gewichtskraft sämtlicher auf der Standfläche 121 befindlichen Hühner gemessen werden. Die Gewichtskraftmessung erfolgt dabei nach folgendem Verfahren. Eine permanente zeitliche Überwachung der Gewichtskraft ergibt naturgemäß Gewichtskraftschwankungen, die einerseits durch Bewegungen der Hühner verursacht sein können, die sich auf der Standfläche 121 befinden und andererseits durch hinzutretende oder von der Standfläche heruntertretenden Hühner verursacht werden können. Aus einer Referenzkurve, welche den typischen Gewichtskraftbereich der im Stallbereich befindlichen Hühner über den Entwicklungszeitraum dieser Hühner wiedergibt, werden solche plötzlichen Gewichtsschwankungen geprüft und wenn die Gewichtsschwankung in einem Gewichtsbereich liegt, der dem Einzelgewicht eines Huhns zu dem entsprechenden Entwicklungszeitpunkt liegt, so wird diese Gewichtsschwankung als eine Einzelgewichtsmessung eines Huhns gewertet und entsprechend weiterverarbeitet, wie beispielsweise für eine spätere Mittelwertbildung gespeichert oder in einem Einzelwertraster zur Zuordnung weiterer Messwerte gespeichert.

Von zwei gegenüberliegenden Rändern der sechseckigen Aufstandsfläche 121 erstrecken sich jeweils ein Profilträger 150, 151, in denen Strahlungssender 160, 170 angeordnet sind. Die Platzierung der Profilträger 150, 151 und die Anordnung und Funktionsweise der Strahlungssender 160 und Strahlungsempfänger 170 übereinstimmend zu den zuvor beschriebenen Profilträgern 50, 51, Strahlungssendem 60 und Strahlungsempfängern 70 der ersten Ausführungsform und auf eine direkte Beschreibung diesbezüglich wird hier verzichtet.

Die durch die Laserstrahlen der Strahlungssender 160 aufgespannte Höhenmessebene verläuft unmittelbar benachbart zu dem Hängegestänge 110.

Auf der Aufstandsfläche 121 ist weiterhin eine zusätzliche, erhöhte Aufstandsfläche 191 auf einem Standbalken 190 angeordnet. Die Aufstandsfläche 191 auf dem Standbalken 190 entspricht der Aufstandsfläche 21 auf dem Standbalken 20 der ersten Ausführungsform und in gleicher Weise wie diese auf einem Kraftsensor 192 angeordnet, der zwischen dem Standbalken 190 und der Aufstandsfläche 121 angeordnet ist. In ebenso gleicher Weise ist in die zusätzliche, erhöhte Aufstandsfläche 191 eine Mehrzahl von Temperatursensoren 140 eingelassen, welche die Fußtemperatur eines Huhnes erfassen, das auf der Aufstandsfläche 191 steht.

Am Hängegestänge 110 ist weiterhin ein Strahlungstemperatursensor 180 platziert, der eine Temperaturstrahlung aus einem engen, schmal gebündelten Strahlungsbereich 181 empfängt, der sich vom Temperatursensor 180 schräg nach unten erstreckt. Der Strahlungsbereich des Temperatursensors 180 verläuft exakt oberhalb der Aufstandsfläche 191, so dass mit dem Temperatursensor 180 die Temperatur des Korpus eines Huhns gemessen werden kann, das sich auf der zusätzlichen Aufstandsfläche 191 befindet. Auf diese Weise wird ermöglicht, dass für ein Huhn, das sich auf der Aufstandsfläche 191 befindet, zeitgleich die Fußtemperatur, die Korpustemperatur und die Gewichtskraft ermittelt und diesem einzelnen Huhn zugeordnet wird.

In gleicher Weise, wie zuvor für die erste Ausführungsform beschrieben, erfasst der Temperatursensor 180 dann, wenn sich kein Huhn im Messbereich des Temperatursensors 180 befindet, die Temperatur des umliegenden Stallbodens. Durch eine frei hängende und gegebenenfalls auch drehbare Aufhängung der Aufstandsfläche 121 ist der Punkt, den der Temperatursensor 180 im Stallboden misst, nicht stets derselbe Punkt, sondern durch Drehung der Aufstandsfläche 121 wird ein umliegender, etwa ringförmiger Bereich abgetastet, so dass eine Mittelung über einen größeren Stallbodenbereich erzielt werden kann.

Mit der erfindungsgemäßen Geflügelwaage wird somit ermöglicht, eine genaue Aussage über die Höhe der einzelnen Tiere und eine Aussage über die Durchschnittshöhe des Tierbestandes zu gewinnen. Hierdurch wird ein für die Beurteilung des Tierzustands wichtiger zusätzlicher Messwert gewonnen und der Gewichtskraft einzelner Tiere zugeordnet.

Insbesondere eignet sich dieser Messwert dazu, dass anhand des Messwerts die Höhe einer Tränke und einer Futterstelle für die Hühner innerhalb des Stalls eingestellt wird. Es ist bekannt, dass es für eine gesunde Entwicklung des Tierbestandes vorteilhaft ist, die Höhe von Tränke und Futterstelle so eingestellt ist, dass sich die Tiere weder zu weit herunterbeugen müssen, um Nahrung oder Flüssigkeit aufzunehmen, noch zu weit heraufreichen müssen, um dies zu tun. Durch eine korrekt eingestellte Höhe wird den Tieren die Nahrungs- und Flüssigkeitsaufnahme erleichtert und zugleich der Hygiene abträgliche Verschmutzung durch verteilte Flüssigkeit oder Nahrung vermieden. Insbesondere kann ein Aktuator vorgesehen sein, wie beispielsweise ein Servomotor, der über eine entsprechende mechanische Kopplung die Tränke und die Futterstelle in Abhängigkeit des Höhenmesssignals verfährt. Dabei kann insbesondere jeweils ein Aktuator sowohl für Getränke und ein weiterer Aktuator für die Futterstelle vorgesehen sein, alternativ hierzu kann auch ein einziger Aktuator vorgesehen sein, der sowohl die Tränke als auch die Futterstelle in der Höhe einstellt.

## Patentansprüche

1. Geflügelwaage, umfassend:
- eine Aufstandsfläche (21; 121; 191), die so ausgebildet ist, dass darauf zumindest ein Geflügeltier stehen kann,
- einen Kraftsensor (30; 130; 191), der so mit der Aufstandsfläche gekoppelt ist, dass er die Gewichtskraft des / der auf der Aufstandsfläche stehenden/r Geflügeltieres erfassen kann,
- eine Auswertungseinheit, wobei der Kraftsensor mit der Auswertungseinheit verbunden ist, **dadurch gekennzeichnet, dass** die Aufstandsfläche (121) ausgebildet ist, um mehrere Geflügeltiere aufzunehmen und die Auswertungseinheit ausgebildet ist, um plötzliche Veränderungen des Kraftsensorsignals mit vorgespeicherten Gewichtsdaten zu vergleichen und dann, wenn die Veränderung des Kraftsensorsignals eine Gewichtskraftveränderung der auf der Aufstandsfläche befindlichen Geflügeltiere darstellt, die in einem vorbestimmten Gewichtskraftbereich ist, die Gewichtskraftänderung als Gewichtskraft eines einzelnenen Geflügeltieres zu speichern, und weiter
**gekennzeichnet durch** einen mit der Aufstandsfläche verbundenen zweiten Sensor (60, 70; 160, 170) zur Erfassung einer anderen Messgröße als der Gewichtskraft eines oder mehrerer Geflügeltiere, das auf der Aufstandsfläche steht.

2. Geflügelwaage nach Anspruch 1,
**dadurch gekennzeichnet, dass** der zweite Sensor ein Sensor (60, 70; 160, 170) zur Messung der Höhe eines oder mehrerer Geflügeltiere ist, die auf der Aufstandsfläche stehen.

3. Geflügelwaage nach Anspruch 2,
**dadurch gekennzeichnet, dass** der Sensor zur Messung der Höhe mehrere in einer sich vertikal erstreckenden Reihe und oberhalb der Aufstandsfläche angeordnete Lichtschranken umfasst, die jeweils einen Strahlungssender (60, 160) und einen Strahlungsempfänger (70, 170) umfassen und ausgebildet sind, um die Unterbrechung eines sich horizontal erstreckenden Strahls zu detektieren.

4. Geflügelwaage nach Anspruch 3,
**dadurch gekennzeichnet, dass** die Strahlungssender so an einer ersten, sich vertikal von der Aufstandsfläche erstreckenden Leiste (50) angeordnet sind und die Strahlungsempfänger so an einer von der ersten Leiste beabstandeten zweiten, sich vertikal erstreckenden Leiste (51) angeordnet sind, dass die Höhe eines sich zwischen den Leisten befindenden Geflügeltieres gemessen wird.

5. Geflügelwaage nach einem der vorhergehenden Ansprüche,
**gekennzeichnet durch** einen Temperatursensor (40; 140; 80; 180), welcher der zweite Sensor oder ein zusätzlicher mit der Aufstandsfläche verbundener dritter Sensor ist und der so angeordnet ist, dass er eine Körpertemperatur eines auf der Aufstandsfläche befindlichen Geflügeltieres messen kann.

6. Geflügelwaage nach dem vorhergehenden Anspruch,
**dadurch gekennzeichnet, dass** der Temperatursensor als Temperaturstrahlungsempfänger (80; 180) ausgebildet ist und eine Temperaturstrahlung aus einem definierten Bereich empfängt.

7. Geflügelwaage nach dem vorhergehenden Anspruch,
**dadurch gekennzeichnet, dass** der Temperatursensor eine Temperaturstrahlung aus einem definierten Bereich (21; 181) empfängt, der sich vom Temperatursensor ausgehend über die Aufstandsfläche nach schräg unten erstreckt und die horizontale Ebene, welche durch die Aufstandsfläche gebildet wird, neben der Aufstandsfläche durchläuft.

8. Geflügelwaage nach dem vorhergehenden Anspruch 5,
**dadurch gekennzeichnet, dass** der zweite oder dritte Sensor oder ein vierter Sensor ein Temperatursensor (40; 140) ist, der in der Aufstandsfläche angeordnet ist und eine Temperatur der Geflügeltierfußes erfasst.

9. Geflügelwaage nach einem der vorhergehenden Ansprüche,
**dadurch gekennzeichnet, dass**
- die Aufstandsfläche (121) zur Aufnahme mehrerer Geflügeltiere ausgebildet ist,
- oberhalb der Aufstandsfläche eine verkleinerte, zweite Aufstandsfläche (191) ausgebildet ist, die zur Aufnahme genau eines Geflügeltieres ausgebildet ist und
- in der zweiten Aufstandsfläche ein Kontakt-Temperatursensor (140) angeordnet ist, der eine Temperatur des Geflügeltierfußes erfasst, und
- oberhalb der zweiten Aufstandsfläche ein Strahlungs-Temperatursensor (180) angeordnet ist, der Strahlung aus dem Bereich empfängt, in dem sich der Körper eines Geflügeltieres befindet, das auf der zweiten Aufstandsfläche steht.

10. Geflügelwaage nach einem der vorhergehenden Ansprüche, **gekennzeichnet durch** eine Auswertungseinheit, welche zumindest das Signal des Kraftsensors (30; 130, 192) und des zweiten Sensors empfängt und ausgebildet ist um diese Signale mit vorbestimmten Werten einer Referenztabelle oder eines Referenzgraphen zu vergleichen.

11. Geflügelwaage nach einem der vorhergehenden Ansprüche, **gekennzeichnet durch** eine Auswertungseinheit, welche zumindest das Signal des Kraftsensors und des zweiten Sensors empfängt und ausgebildet ist um diese Signale mit vorbestimmten Werten einer Referenztabelle oder eines Referenzgraphen zu vergleichen.

12. Geflügelwaage nach einem der vorhergehenden Ansprüche, **gekennzeichnet durch** eine mit der Aufstandsfläche verbundene Kamera, welche der zweite Sensor oder ein zusätzlicher Sensor ist und die ausgebildet ist, um die Kontur eines Geflügeltieres oder eines Teils eines Geflügeltieres zu erfassen.

13. Geflügelstallausrüstung, umfassend eine Geflügelwaage nach einem der vorhergehenden Ansprüche und eine Tränke und/oder Futterstelle,
**gekennzeichnet durch**
- einen Aktuator, der mit der Tränke und/oder Futterstelle solcherart gekoppelt ist, dass mittels des Aktuators die Höhe der Tränke und/oder Futterstelle verstellt werden kann, und
- eine Steuerungseinheit, welche von einem zweiten Sensor der Geflügelwaage, der als Höhenmesssensor ausgebildet ist, zumindest ein Höhensignal empfängt, dies auswertet und welche mit dem Aktuator verbunden ist, um diesen in Abhängigkeit des Signals des Höhenmessensors anzusteuern.

## Claims

1. Poultry weighing apparatus, comprising:
- a support surface (21; 121; 191) designed to enable at least one poultry animal to stand thereon,
- a force sensor (30; 130; 191) coupled with the support surface to tenable the weight of the poultry animal(s) standing on the support surface to be detected,
- an evaluation unit, the force sensor being connected to the evaluation unit, **characterised in that** the support surface (121) is designed to support several poultry animals and the evaluation unit is configured to compare sudden changes in the force sensor signal with previously stored weight data and, if the change in the force sensor signal represents a change in the weight of the poultry animals disposed on the support surface falling within a predefined weight range, to then store the change in weight as the weight of an individual poultry animal, and
further **characterised by** a second sensor (60, 70; 160, 170) connected to the support surface for detecting another measurement variable as the weight of one or more poultry animals standing on the support surface.

2. Poultry weighing apparatus as claimed in claim 1, **characterised in that** the second sensor is a sensor (60, 70; 160, 170) for measuring the height of one or more poultry animals standing on the support surface.

3. Poultry weighing apparatus as claimed in claim 2, **characterised in that** the sensor for measuring height comprises several light barriers in a vertically extending row and disposed above the support surface, each of which comprises a radiation emitter (60, 160) and a radiation receiver (70, 170) and configured to detect the interruption of a horizontally extending beam.

4. Poultry weighing apparatus as claimed in claim 3, **characterised in that** the radiation emitter is disposed on a first bar (50) extending vertically from the support surface and the radiation receiver is disposed on a second, vertically extending bar (51) spaced apart from the first bar such that the height of a poultry animal disposed between the bars is measured.

5. Poultry weighing apparatus as claimed in one of the preceding claims,
**characterised by** a temperature sensor (40; 140; 80; 180) which is the second sensor or an additional third sensor connected to the support surface and which is disposed so that it is able to measure a body temperature of a poultry animal disposed on the support surface.

6. Poultry weighing apparatus as claimed in the preceding claim,
**characterised in that** the temperature sensor is provided in the form of a thermal radiation receiver (80; 180) and receives thermal radiation from a defined area.

7. Poultry weighing apparatus as claimed in the preceding claim,
**characterised in that** the temperature sensor receives thermal radiation from a defined area (21; 181) which extends down at an angle from the temperature sensor via the support surface and passes through the horizontal plane formed by the support surface next to the support surface.

8. Poultry weighing apparatus as claimed in preceding claim 5,
**characterised in that** the second or third sensor or a fourth sensor is a temperature sensor (40; 140) which is disposed in the support surface and which detects a temperature of the poultry animal's foot.

9. Poultry weighing apparatus as claimed in one of the preceding claims,
**characterised in that**
- the support surface (121) is designed to support several poultry animals,
- a smaller, second support surface (191) designed to support precisely one poultry animal is provided above the support surface and
- a contact temperature sensor (140) which detects a temperature of the poultry animal's foot is disposed in the second support surface, and
- a radiation temperature sensor (180) is disposed above the second support surface, which receives radiation from the area in which the body of a poultry animal standing on the second support surface is disposed.

10. Poultry weighing apparatus as claimed in one of the preceding claims,
**characterised by** an evaluation unit which receives at least the signal of the force sensor (30; 130, 192) and the second sensor and is configured to compare these signals with predefined values of a reference table or a reference graph.

11. Poultry weighing apparatus as claimed in one of the preceding claims,
**characterised by** an evaluation unit which receives at least the signal of the force sensor and the second sensor and is configured to compare these signals with predefined values of a reference table or a reference graph.

12. Poultry weighing apparatus as claimed in one of the preceding claims,
**characterised by** a camera connected to the support surface which is the second sensor or an additional sensor and which is configured to detect the contour of a poultry animal or a part of a poultry animal.

13. Poultry house equipment comprising a poultry weighing apparatus as claimed in one of the preceding claims and a drinking trough and/or feeding point,
**characterised by**
- an actuator coupled with the drinking trough and/or feeding point in such a way that the height of the drinking trough and/or feeding point can be adjusted by means of the actuator, and
- a control unit which receives from a second sensor of the poultry weighing apparatus provided in the form of a height measuring sensor at least one height signal and evaluates it, and which is connected to the actuator in order to activate it as a function of the signal of the height measuring sensor.

## Revendications

1. Balance pour volaille, comprenant :
- un plateau (21 ; 121 ; 191) qui est réalisé de telle sorte qu'au moins une volaille peut s'y tenir debout,
- un capteur d'effort (30 ; 130 ; 191) qui est couplé au plateau de telle sorte qu'il peut détecter le poids de la / des volaille(s) se trouvant sur le plateau,
- une unité d'évaluation, le capteur d'effort étant relié à l'unité d'évaluation, **caractérisée en ce que** le plateau (121) est réalisé de manière à recevoir plusieurs volailles et l'unité d'évaluation est réalisée de manière à comparer des variations brusques du signal de capteur d'effort avec des données de poids préenregistrées puis, lorsque la variation du signal de capteur d'effort représente un changement de poids des volailles se trouvant sur le plateau, lequel changement se situe dans une plage de poids prédéfinie, à enregistrer le changement de poids comme poids d'une seule volaille, et en outre
**caractérisée par** un deuxième capteur (60, 70 ; 160, 170) relié au plateau et destiné à détecter une grandeur à mesurer autre que le poids d'une ou de plusieurs volailles qui se trouve(nt) sur le plateau.

2. Balance pour volaille selon la revendication 1,
**caractérisée en ce que** le deuxième capteur est un capteur (60, 70 ; 160, 170) de mesure de la taille d'une ou de plusieurs volailles qui se trouve(nt) sur le plateau.

3. Balance pour volaille selon la revendication 2,
**caractérisée en ce que** le capteur de mesure de la taille comprend plusieurs cellules photoélectriques formant une rangée s'étendant verticalement et disposées au-dessus du plateau, qui comprennent respectivement un émetteur de rayonnement (60, 160) et un récepteur de rayonnement (70, 170) et sont réalisées de manière à détecter l'interruption d'un faisceau s'étendant horizontalement.

4. Balance pour volaille selon la revendication 3,
**caractérisée en ce que** les émetteurs de rayonnement sont disposés au niveau d'une première barre (50) s'étendant verticalement du plateau et les récepteurs de rayonnement sont disposés au niveau d'une deuxième barre (51) s'étendant verticalement, espacée de la première barre de telle sorte que la taille d'une volaille se trouvant entre les barres est mesurée.

5. Balance pour volaille selon l'une quelconque des revendications précédentes,
**caractérisée par** un capteur de température (40 ; 140 ; 80 ; 180) qui est le deuxième capteur ou un troisième capteur supplémentaire relié au plateau et qui est disposé de sorte à pouvoir mesurer une température corporelle d'une volaille se trouvant sur le plateau.

6. Balance pour volaille selon la revendication précédente,
**caractérisée en ce que** le capteur de température est réalisé sous forme de récepteur de rayonnement de température (80 ; 180) et détecte un rayonnement de température d'une zone définie.

7. Balance pour volaille selon la revendication précédente,
**caractérisée en ce que** le capteur de température reçoit un rayonnement de température d'une zone définie (21 ; 181) qui part du capteur de température et s'étend obliquement vers le bas au-dessus du plateau et traverse le plan horizontal, qui est formé par le plateau, à côté du plateau.

8. Balance pour volaille selon la revendication précédente 5,
**caractérisée en ce que** le deuxième ou le troisième capteur ou un quatrième capteur est un capteur de température (40 ; 140) qui est disposé dans le plateau et détecte une température de la patte de la volaille,

9. Balance pour volailles selon l'une quelconque des revendications précédentes, **caractérisée en ce que**
- le plateau (121) est réalisé de manière à recevoir plusieurs volailles,
- un deuxième plateau (191) plus petit, qui est réalisé de manière à recevoir exactement une volaille, est réalisé au-dessus du plateau et
- un capteur de température par contact (140), qui détecte une température de la patte de la volaille, est disposé dans le deuxième plateau et
- un capteur de température par rayonnement (180), qui reçoit le rayonnement de la zone dans laquelle se trouve le corps d'une volaille qui se situe sur le deuxième plateau, est disposé au-dessus du deuxième plateau.

10. Balance pour volaille selon l'une quelconque des revendications précédentes, **caractérisée par** une unité d'évaluation qui reçoit au moins le signal de capteur d'effort (30 ; 130, 192) et du deuxième capteur et est réalisée de manière à comparer ces signaux avec des valeurs prédéfinies d'un tableau de référence ou d'un graphe de référence.

11. Balance pour volaille selon l'une quelconque des revendications précédentes, **caractérisée par** une unité d'évaluation qui reçoit au moins le signal de capteur d'effort et du deuxième capteur et est réalisée de manière à comparer ces signaux avec des valeurs prédéfinies d'un tableau de référence ou d'un graphe de référence.

12. Balance pour volaille selon l'une quelconque des revendications précédentes, **caractérisée par** une caméra reliée au plateau qui est le deuxième capteur ou un capteur supplémentaire et qui est réalisée de manière à détecter le contour d'une volaille ou d'une partie d'une volaille.

13. équipement pour poulailler comprenant une balance pour volaille selon l'une quelconque des revendications précédentes et un abreuvoir et/ou une mangeoire, **caractérisée par**
- un actionneur qui est couplé à l'abreuvoir et/ou à la mangeoire de telle sorte que la hauteur de l'abreuvoir et/ou de la mangeoire peut être réglée à l'aide de actionneur, et
- une unité de commande laquelle reçoit au moins un signal de taille d'un deuxième capteur de la balane pour volaille, qui est réalisé sous forme d'un capteur de mesure de taille, l'évalue et laquelle est reliée à l'actionneur pour le commander en fonction du signal de capteur de mesure de taille.
